# EUROPÄISCHE PATENTSCHRIFT

(11) **EP 3 448 624 B1**
(45) Veröffentlichungstag und Bekanntmachung des Hinweises auf die Patenterteilung: **15.04.2020**
(21) Anmeldenummer: 17723258.4
(22) Anmeldetag: 25.04.2017
(51) Int. Cl.: B24B 39/00

(54) **ROLLIERWERKZEUG**
ROLLER BURNISHING TOOL
OUTIL DE GALETAGE

(30) Priorität: 26.04.2016 DE 102016005047
(43) Veröffentlichungstag der Anmeldung: 06.03.2019
(73) Patentinhaber: Hoffmann GmbH Qualitätswerkzeuge, 81241 München (DE)
(72) Erfinder: HAHN, Karlheinz, 94315 Straubing (DE)
(74) Vertreter: Seemann & Partner Patentanwälte mbB
(86) Internationale Anmeldenummer: PCT/EP2017/000523
(87) Internationale Veröffentlichungsnummer: WO 2017/186348

(56) Entgegenhaltungen:
- WO-A1-2012/084612
- DE-A1- 1 752 071
- DE-A1- 19 845 226
- FR-A- 1 318 128
- US-A1- 2002 020 062

## Beschreibung

Die Erfindung betrifft ein Rollierwerkzeug gemäß dem Oberbegriff des Anspruchs 1.

Ein derartiges Rollierwerkzeug ist z.B. aus der DE 10 2013 018 899 A1 bekannt und dient dem spanlosen Glätten von rauen Oberflächen durch konisch ausgebildete Wälzkörper in Form von Rollierrollen. Das Rollierwerkzeug wird verwendet, um eine metallische Oberfläche zu glätten, die nach Grobbearbeitungsgängen wie etwa Drehen, Fräsen, Schleifen etc. regelmäßig eine Oberflächenstrukturierung oder eine Rauigkeit aufweist. Dabei fährt der die Rollierrollen tragende Rollenträger des Rollierwerkzeugs in Umfangsrichtung rotierend in einer Vorschubrichtung an der zu bearbeitenden Oberfläche des Werkstücks entlang, wobei die Rollierrollen die zu bearbeitenden Oberfläche kontaktieren. Aufgrund eines Anpressdrucks der Rollierrollen wird die Oberflächenschicht des Werkstücks durch plastische Verformung geglättet. Dazu werden beim Rollieren die Rollierrollen mit einer senkrecht zur Lauffläche gerichteten Kraft (Rollierkraft) beaufschlagt. Neben der Glättungswirkung wird deshalb auch eine Verfestigungswirkung am Werkstück erzielt.

Das zu glättende Werkstück ist beispielsweise aus einem weichen Werkstoff, wie etwa Aluminium, und die Rollierrollen sind aus einem relativ zu dem zu glättenden Werkstück aus einem härteren Werkstoff, wie etwa Stahl, Hartmetall oder Vollhartmetall gefertigt. Unter Hartmetallen versteht man gesinterte Carbidhartmetalle (engl. *Cemented carbide*)*.* Hartmetall besteht meistens aus 90-Carbidhartmetalle (engl. *Cemented carbide*)*.* Hartmetall besteht meistens aus 90-94 % Wolframcarbid, Titancarbid, Titancarbid, Tantalcarbid, Chromcarbid oder Vanadiumcarbid (Verstärkungsphase) und 6-10% Cobalt (Matrix, Bindemittel, Zähigkeitskomponente) sowie evtl. Kohlenstoff. Die Wolframcarbidkörner sind durchschnittlich etwa 0,5-1 Mikrometer groß. Das Cobalt füllt die Zwischenräume.

Während die Glättungswirkung bei herkömmlichen Rollierwerkzeugen im Vordergrund steht, kann zusätzlich auch der Verfestigungs- und Verformungseffekt des Rollierwerkzeugs ausgenutzt werden. So hat sich etwa herausgestellt, dass in eine zu bearbeitende Oberfläche eingebrachte Nuten mit dazwischen angeordneten Stegen mithilfe eines Rollierwerkzeugs derart verformbar sind, dass Hinterschnitte entstehen. Die einwirkende Rollierkraft drückt nämlich beim Rollieren von oben auf die Stege und plättet deren Scheitelabschnitte, während die Nutböden im Wesentlichen unverändert bleiben. Dieser Effekt kann besonders vorteilhaft sein, da die Herstellung von Nuten mit Hinterschnitten mit Hilfe herkömmlicher spanender Verfahren komplex und zeitaufwändig ist. Anschließend kann eine Beschichtungsmasse in die Nuten mit Hinterschnitt eingebracht werden, wobei diese Beschichtungsmasse in die Hinterschnittabschnitte der Nuten eingreifen kann, so dass sie besonders fest in den Nuten verankert ist. Ein solches Verfahren ist beispielsweise aus DE 10 2013 011 726.7 bekannt.

Allerdings hat sich herausgestellt, dass die Rollierrollen gemäß der DE 10 2013 018 899 A1 aufgrund ihrer konischen Ausbildung entlang ihrer sich in ihrer Drehachse erstreckenden Längsachse unterschiedliche Umfangsgeschwindigkeiten aufweisen und daher nur abschnittsweise auf der zu bearbeitenden Oberfläche wie gewünscht abrollen, in anderen Abschnitten aber in unerwünschter Weise über die zu bearbeitende Oberfläche gleiten, was den Versschleiß des Rollierwerkzeugs erhöht und damit seine Lebensdauer reduziert.

Die Druckschrift DE 198 45 226 A1 offenbart ein Rollwerkzeug zum Einebnen von Oberflächenrauhigkeiten auf einer Bohrungsoberfläche. Der Oberbegriff von Anspruch 1 basiert auf dieser Druckschrift. Das Rollwerkzeug umfasst eine Antriebswelle zum Einführen in eine Bohrung und eine an einem Einführende der Antriebswelle angeordnete, mehrere Rollen aufweisende Rolleneinrichtung. Die Rolleneinrichtung ist auf einer Rollenabstützeinrichtung derart angeordnet, dass bei einer Drehung der Welle die Rollen der Rolleneinrichtung zumindest teilweise auf der Rollenabstützeinrichtung abrollen, wobei die Rollenabstützeinrichtung aus einer unter dem Druck der Rollen elastisch verformbaren Hülse gebildet ist. Die Rolleneinrichtung weist eine Rollenführung auf, die aus einem sich axial erstreckenden und koaxial zur Längsachse angeordneten Randsteg mit darin einschnittartig ausgebildeten Rollenaufnahmen gebildet ist. Insgesamt weist die Rollenführung eine kronenartige und einstückig am Einführende angeformte Ausbildung auf. Die Rollenaufnahmen erstrecken sich parallel zur Längsachse und weisen konkav ausgebildete Führungsflächen auf, die die Rollen in einem ausreichenden Bewegungsspiel führen, so dass neben einer Rotation der Rollen in den Rollenaufnahmen auch eine radiale Bewegung der Rollen möglich ist. Zwischen der Rollenführung und dem Lagerzapfen befindet sich in einer schwimmenden Lageranordnung auf dem Lagerzapfen die Hülse, deren Außendurchmesser entsprechend dem inneren Abrollradius r der Rolleneinrichtung bemessen ist, so dass die Rollen auf dem Außenumfang der Hülse abrollen können.

Die Druckschrift DE 198 45 226 A1 offenbart zwar eine Hülse, auf deren Außenumfang die Rollen abrollen, jedoch dient diese Hülse lediglich als Rollenabstützeinrichtung die von den Rollen verformt werden kann, so dass sich beim Überrollen von Rauhigkeitsspitzen ein erhöhter Druck auf die Rollen durch die elastische Rückstellkraft der Hülse ergibt, so dass beim wiederholten Überrollen der Rauhigkeitsspitzen diese eingeebnet werden. Die Hülse ist schwimmend auf einem Lagerzapfen, der in die Welle eingeschraubt ist, angeordnet. Somit ist die Hülse nicht antriebskräfteübertragend mit der Antriebswelle verbunden.

Die US 2002/0020062 A1 offenbart ein Werkzeug zum Bearbeiten innerer Oberflächen. Das Werkzeug weist eine Welle, ein rotierbares Kernstück, kugelförmige Elemente und Rollierelemente auf. Dabei steht das rotierbare Kernstück lediglich über die kugelförmigen Elemente mit der Welle in Kontakt. Demnach ist das rotierbare Kernstück nicht antriebskräfteübertragend mit der Welle verbunden.

Die DE 17 52 071 A1 offenbart einen Rolldorn zum Presspolieren von Bohrungen. Der Rolldorn weist Rollen auf, die zylindrisch ausgebildet sind und auf einem innerhalb des Rolldorns angeordneten, zentralen Konus laufen. Der Rolldorn selbst ist die Antriebswelle und bildet einen Käfig für die Rollen. Der zentrale Konus ist nicht antriebskräfteübertragend mit dem Rolldorn verbunden, sondern ist dort schwimmend zwischen zwei Kugeln gelagert.

Es ist daher Aufgabe der vorliegenden Erfindung, ein verbessertes Rollierwerkzeug bereitzustellen.

Diese Aufgabe wird erfindungsgemäß durch ein Rollierwerkzeug der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Rollierwerkzeug der o.g. Art erfindungsgemäß vorgesehen, dass die Innenwalze antriebskräfteübertragend mit einer Antriebswelle des Rollierwerkzeugs verbunden ist.

Dies hat den Vorteil, dass eine planentengetriebeähnliche Anordnung mit feststehender Außen-Hohlwelle gebildet wird. Im Betrieb überträgt die von der Antriebswelle in Drehung versetzte Innenwalze Antriebskraft auf die zumindest eine Rollierrolle, die daraufhin ebenfalls in Drehung versetzt wird. Die zumindest eine Rollierrolle wälzt dann auf der zu bearbeitenden Oberfläche ab, die selber feststehend ist.

Gemäß einer bevorzugten Ausführungsform weist der Rollenträger eine Drehachse auf, die im Wesentlichen parallel zu der Rollenachse verläuft. Unter im Wesentlichen wird innerhalb üblicher Fertigungstoleranzen liegend verstanden. So kann das Rollierwerkzeug einen besonders einfachen Aufbau aufweisen und ist besonders einfach zu handhaben.

Gemäß einer weiteren bevorzugten Ausführungsform weisen der Rollenkäfig und die Innenwalze eine Spielpassung auf. Dabei wird unter einer Spielpassung eine Bemassung des Rollenkäfigs und der Innenwalze verstanden, bei der sich ein mechanisches Bauteil nach der Montage gegen ein anderes Bauteil der Baugruppe bzw. Funktionseinheit frei bewegen lässt. So ist das Kleinstmaß des Innendurchmesser des ringförmigen Rollenkäfigs immer größer, im Grenzfall auch gleich groß, als das Größtmaß des Außendurchmessers der Innenwalze.

Gemäß einer weiteren bevorzugten Ausführungsform ist die Innenwalze lösbar in den Rollenkäfig eingesetzt. So kann die Innenwalze aus dem Rollenkäfig entfernt und durch Bearbeiten einer neuen Bearbeitungssituation angepasst werden, oder es kann eine erste Innenwalze durch eine zweite Innenwalze mit einem anderen Außendurchmesser als die erste Innenwalze ersetzt werden, um so eine Veränderung bzw. Anpassung der radialen Lage der Rollierrolle bzw. der Begrenzung der Verlagerbarkeit der Rollierrolle in radialer Richtung zu bewirken.

Gemäß einer weiteren bevorzugten Ausführungsform sind der Rollenkäfig und die Innenwalze aus einer unterschiedliche Materialien aufweisenden Materialpaarung gefertigt. So kann durch eine geeignete Materialpaarwahl die Reibung zwischen dem Rollenkäfig und der Innenwalze reduziert werden. Z.B. können der Rollenkäfig aus Rotguß und die Innenwalze aus Stahl gefertigt sein.

Gemäß einer weiteren bevorzugten Ausführungsform sind zumindest eine Rollierrolle und der Rollenkäfig aus einer unterschiedliche Materialien aufweisenden Materialpaarung gefertigt. So kann durch eine geeignete Materialpaarwahl die Reibung zwischen der zumindest einen Rollierrolle und dem Rollenkäfig reduziert werden. Z.B. ist zumindest eine Rollierrolle aus Stahl, Hartmetall oder Vollhartmetall gefertigt.

Gemäß einer weiteren bevorzugten Ausführungsform weist die Innenwalze flüssigkeitsführende Kanäle auf. Durch die flüssigkeitsführenden Kanäle kann Kühl- und/oder Schmiermittel der Baugruppe bestehend aus der Innenwalze und dem Rollenkäfig zugeführt werden, um so deren Kühlung und/oder Schmierung zu bewirken.

Gemäß einer weiteren bevorzugten Ausführungsform sind eine Mehrzahl von Innenwalzen mit unterschiedlichen Außendurchmessern zum Austausch vorgesehen. Dabei weist jede der Mehrzahl der Innenwalzen einen unterschiedlichen Außendurchmesser auf. So kann eine erste Innenwalze durch eine zweite Innenwalze mit einem anderen Außendurchmesser als die erste Innenwalze ersetzt werden, um so eine Veränderung bzw. Anpassung der radialen Lage der Rollierrolle bzw. der Begrenzung deren Verlagerbarkeit in radialer Richtung zu bewirken.

Gemäß einer weiteren bevorzugten Ausführungsform ist ein Aufrauungsabschnitt mit bzgl. der Rollenachse radial nach außen vorstehenden Erhebungen vorgesehen. Die vorstehenden Erhebungen können durch eine Diamantbeschichtung gebildet sein.

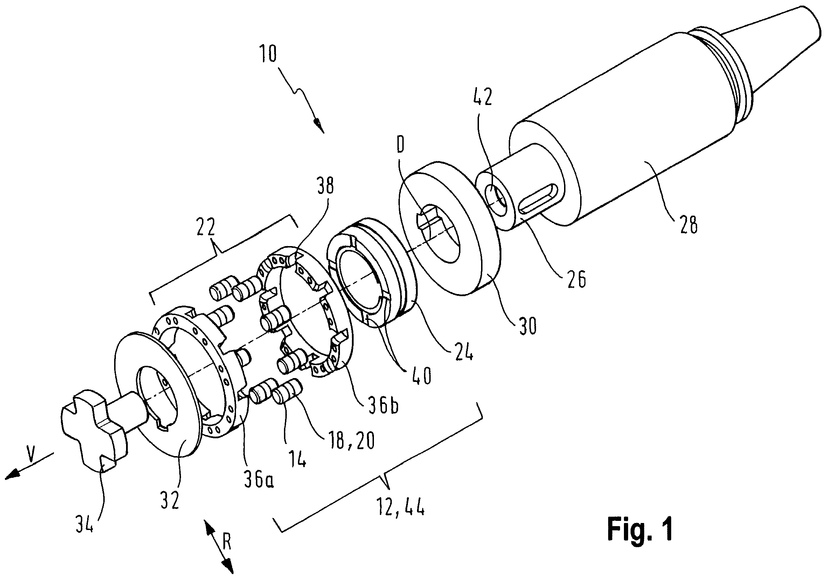

Die Erfindung wird im Folgenden anhand der Zeichnung näher erläutert. Diese zeigt in
- Fig. 1: eine Explosionsdarstellung eines Ausführungsbeispiels eines Rollierwerkzeugs.

Das Rollierwerkzeug 10 gemäß dem vorliegenden Ausführungsbeispiel weist einen Rollenträger 12, einen Halter 28, eine erste Distanzscheibe 30, eine zweite Distanzscheibe 32 und eine Kreuzmutter 34 auf.

Der Rollenträger 12 weist einen ringförmigen Rollenkäfig 22 auf, der eine Mehrzahl von Rollierrollen 14 drehbar lagert. Hierzu ist im vorliegenden Ausführungsbeispiel der Rollenkäfig 22 aus zwei baugleich ausgebildeten Rollenkäfighälften 36a, 36b gebildet, die zusammen eine der Mehrzahl der Rollierrollen 14 entsprechende Anzahl von Rollierrollenaufnahmen 38 bilden. Die Rollierrollenaufnahmen 38 sind dabei derart ausgebildet, dass die eingesetzten Rollierrollen 14 mit Spiel in radialer Richtung R gelagert sind.

Die Rollierrollen 14 weisen eine im Wesentlichen zylinderförmige Grundform auf, wobei die Mantelfläche jeweils einen Abschnitt mit Erhebungen 20 aufweist, die z.B. durch eine Diamantbeschichtung gebildet sind.

Der Rollenträger 12 bildet zusammen mit einer Innenwalze 24 eine Baugruppe 44, wobei die Innenwalze 24 ebenfalls eine ringförmige Grundform aufweist, die in einen Innenraum des ringförmig ausgebildeten Rollenkäfigs 22 eingesetzt ist. Zwischen dem Rollenträger 12 und der Innenwalze 24 ist eine Spielpassung gegeben. Somit ist der Innendurchmesser des Rollenträgers 12 im vorliegenden Ausführungsbeispiel größer als der Außendurchmesser der Innenwalze 24. Daher begrenzt die eingesetzte Innenwalze 24 die Verlagerbarkeit der in die Rollierrollenaufnahmen 38 eingesetzten Rollierrollen 14 in radialer Richtung R, und zwar in radialer Einwärtsrichtung, während die Rollierrollen 14 weiterhin Spiel in radialer Auswärtsrichtung haben.

Die Rollierrollenaufnahmen 38 sind im vorliegenden Ausführungsbeispiel in Umfangsrichtung gleichmäßig voneinander beabstandet an der Außenfläche des Rollenkäfigs 22 angeordnet. Zwischen je zwei Rollierrollenaufnahmen 38 sind ferner im vorliegenden Ausführungsbeispiel je zwei Bohrungen gebildet, in die Stifte in Presspassung eingesetzt sind, um die beiden Rollenkäfighälfte 36a, 36b miteinander zu verbinden.

Der Rollenkäfig 22 und die Innenwalze 24 sind aus einer unterschiedliche Materialien aufweisenden Materialpaarung gefertigt. Im vorliegenden Ausführungsbeispiel sind der Rollenkäfig 22 aus Rotguß und die Innenwalze 24 aus Stahl gefertigt. Ferner sind auch der Rollenkäfig 22 und die eingesetzten Rollierrollen 14 aus einer unterschiedliche Materialien aufweisenden Materialpaarung gefertigt. Im vorliegenden Ausführungsbeispiel sind die Rollierrollen 14 aus Vollhartmetall gefertigt.

So kann durch eine geeignete Materialpaarwahl die Reibung zwischen dem Rollenkäfig 22 und der Innenwalze 24 sowie zwischen dem Rollenkäfig 22 und den Rollierrollen 24 reduziert werden.

Die Innenwalze 24 weist ferner im vorliegenden Ausführungsbeispiel flüssigkeitsführende Kanäle 40 auf, um den Rollenträger 12 mit einem Schmier- und/oder Kühlmittel, wie einer Wasser-Öl-Emulsion im vorliegenden Ausführungsbeispiel, zur Schmierung und Kühlung zu versorgen.

Die flüssigkeitsführenden Kanäle 40 umfassen im vorliegenden Ausführungsbeispiel an den axialen Stirnseiten der Innenwalze 24 jeweils eine umlaufende Nut und sich in radialer Richtung erstreckende Kanalabschnitte.

Die flüssigkeitsführenden Kanäle 40 werden mit Schmier- und/oder Kühlmittel durch eine Austrittsöffnung 42 versorgt, die im vorliegenden Ausführungsbeispiel an einer Stirnseite einer Antriebswelle 26 des Halters 28 angeordnet ist.

Die erste Distanzscheibe 30 ist im vorliegenden Ausführungsbeispiel am proximalen Ende des Rollierwerkzeugs 10 angeordnet, während die zweite Distanzscheibe 32 und die Kreuzmutter 34 am distalen Ende des Rollierwerkzeugs 10 angeordnet sind.

Die erste Distanzscheibe 30 weist eine größere Dicke als die zweite Distanzscheibe 32 auf, sodass das Rollierwerkzeug 10 problemlos bis auf den Grund eines als Sackloch ausgebildeten Zylinders abgesenkt werden kann, um auch dort liegende Abschnitte der Innenwand der Zylinders zu bearbeiten.

Die in Fig. 1 dargestellte Kreuzmutter 34 stellt im vorliegenden Ausführungsbeispiel eine drehfeste Verbindung von einer Antriebswelle 26 des auch in Fig. 1 dargestellten Halters 28 mit der Innenwalze 24 her.

Im Betrieb wird das Rollierwerkzeug 10 in Vorschubrichtung V in ein Werkstück, wie z.B. einen Zylinder eines Zylinderblocks einer Hubkolbenmaschine, eingeführt, dessen Innenfläche als Werkstückoberfläche bearbeitet werden soll. D.h., die Zylinderinnenfläche ist die zu bearbeitende Oberfläche.

Die Antriebswelle 26 setzt die Innenwalze 24 in eine Drehung um die Drehachse D des Rollenträgers 12. Die Drehung der Innenwalze 24 wiederrum bewirkt eine Drehung der Rollierrollen 14 um ihre jeweiligen Rollenachse A, die im vorliegenden Ausführungsbeispiel parallel zueinander sind.

Durch die Drehung der Rollierrollen 14 um ihre jeweiligen Rollenachse A wälzen sich diese an der zu bearbeitenden Zylinderinnenfläche ab. Mit anderen Worten bildet das Rollierwerkzeug 10 eine planentengetriebeähnliche Anordnung mit der zu bearbeitenden Innenfläche des Zylinders als feststehende Außen-Hohlwelle.

Die Innenwalze 24 verhindert eine Verlagerung der Rollierrollen 14 radial einwärts in radialer Richtung R, so dass ein Kontakt der Rollierrollen 14 mit der zu bearbeitenden Innenfläche gewährleistet ist.

Aufgrund des Spiels zwischen der Innenwalze 24 und dem Rollenkäfig 22 können aber einzelnen Rollierrollen 14 durch Verlagern der Innenwalze 24 in dem ringförmigen Rollenkäfig 22 radial auswärts in radialer Richtung R verlagert werden, um so gegebenenfalls einen Kontakt der Rollierrollen 14 mit der zu bearbeitenden Innenfläche wieder herzustellen.

Um das Spiel zu verringern oder zu erhöhen, das eine Verlagerung der Rollierrollen 14 verhindert, kann die Innenwalze 24 aus dem Rollenkäfig 24 entfernt und durch eine andere, zweite Innenwalze, ausgewählt aus einer Mehrzahl von Innenwalzen mit unterschiedlichen Außendurchmessern ersetzt werden. Alternativ kann die aus dem Rollenkäfig 24 entfernte Innenwalze 24 bearbeitet werden, um deren Außendurchmesser zu reduzieren und so das Spiel zu erhöhen, dass eine Verlagerung der Rollierrollen 14 verhindert. Dies ist dann vorteilhaft, wenn ein Innendurchmesser des fertig bearbeiteten Werkstücks (Innendurchmesser eines Zylinders) größer als ein vorbestimmter Schwellwert ist.

Aufgrund der zylinderförmigen Grundform der Rollierrollen 14 und deren radialer Verlagerbarkeit zur Sicherstellung eines Kontaktes der Rollierrollen 14 mit der zu bearbeitenden Innenfläche gibt es keine Abschnitte mit verschiedenen Umfangsgeschwindigkeiten, so dass es lediglich eine Abwälzbewegung der Rollierrolle 14 auf der zu bearbeitenden Oberfläche gibt. Daher unterliegt das Rollierwerkzeug 10 einem geringeren Verschleiß und die Bearbeitung der zu bearbeitenden Oberfläche kann mit einer höheren Genauigkeit durchgeführt werden.

## Patentansprüche

1. Rollierwerkzeug (10) mit einem in einer Vorschubrichtung (V) vorstehenden Rollenträger (12), an dem in einer Umfangsrichtung eine Mehrzahl von Rollierrollen (14) zum Bearbeiten einer Werkstückoberfläche um eine Rollenachse (A) drehbar angeordnet ist, wobei die Rollierrollen (14) je eine Anlagefläche zur Anlage an dem Werkstück aufweisen, wobei die Rollierrollen (14) je eine zylinderförmige Grundform aufweisen und die Rollierrollen (14) je in radialer Richtung (R) verlagerbar gelagert ist, wobei der Rollenträger (12) einen ringförmigen Rollenkäfig (22) aufweist, der die Mehrzahl von Rollierrollen (14) drehbar lagert, wobei in den Rollenkäfig (22) eine Innenwalze (24) mit ringförmiger Grundform eingesetzt ist, wobei die Innenwalze (24) eine Außenfläche aufweist, wobei die Außenfläche der Innenwalze (24) mit einer Außenfläche der Rollierrollen (14) zusammenwirkt, **dadurch gekennzeichnet, dass** die Innenwalze (24) antriebskräfteübertragend mit einer Antriebswelle (26) des Rollierwerkzeugs (10) verbunden ist.

2. Rollierwerkzeug (10) nach Anspruch 1, **dadurch gekennzeichnet, dass** der Rollenträger (12) eine Drehachse (D) aufweist, die im Wesentlichen parallel zu der Rollenachse (A) verläuft.

3. Rollierwerkzeug (10) nach Anspruch 1 oder 2, **dadurch gekennzeichnet, dass** der Rollenkäfig (22) und die Innenwalze (24) eine Spielpassung aufweisen.

4. Rollierwerkzeug (10) nach einem der vorstehenden Ansprüche, **dadurch gekennzeichnet, dass** die Innenwalze (24) lösbar in den Rollenkäfig (22) eingesetzt ist.

5. Rollierwerkzeug (10) nach einem der vorstehenden Ansprüche, **dadurch gekennzeichnet, dass** der Rollenkäfig (22) und die Innenwalze (24) aus einer unterschiedliche Materialien aufweisenden Materialpaarung gefertigt sind.

6. Rollierwerkzeug (10) nach einem der vorstehenden Ansprüche, **dadurch gekennzeichnet, dass** der Rollenkäfig (22) und die zumindest eine Rollierrolle (14) aus einer unterschiedliche Materialien aufweisenden Materialpaarung gefertigt sind.

7. Rollierwerkzeug (10) nach einem der vorstehenden Ansprüche, **dadurch gekennzeichnet, dass** die Innenwalze (24) flüssigkeitsführende Kanäle (40) aufweist.

8. Rollierwerkzeug (10) nach einem der vorstehenden Ansprüche, **dadurch gekennzeichnet, dass** ein Innenwalzensatz mit einer Mehrzahl von Innenwalzen (24) mit unterschiedlichen Außendurchmessern zum Austausch vorgesehen ist.

9. Rollierwerkzeug (10) nach einem der vorstehenden Ansprüche, **gekennzeichnet durch** einen Aufrauungsabschnitt (18) mit bzgl. der Rollenachse (A) radial nach außen vorstehenden Erhebungen.

## Claims

1. A roller burnishing tool (10) having a roller support (12) which projects in an feed direction (V) and on which, in a circumferential direction, a plurality of burnishing rollers (14) for machining a workpiece surface is rotatably arranged about a roller axis (A), wherein the burnishing rollers (14) each have a contact surface for coming into contact with the workpiece, wherein the burnishing rollers (14) each have a basic cylindrical shape, and the burnishing rollers (14) are mounted such that they can be displaced in a radial direction (R), wherein the roller support (12) has an annular roller cage (22) that rotatably bears the plurality of burnishing rollers (14), wherein an inner roller (24) with a basic annular shape is inserted into the roller cage (22), wherein the inner roller (24) has an outer surface, wherein the outer surface of the inner roller (24) interacts with an outer surface of the burnishing rollers (14), **characterized in that** the inner roller (24) is connected so as to transfer driving force to a drive shaft (26) of the roller burnishing tool (10).

2. The roller burnishing tool (10) according to claim 1, **characterized in that** the roller support (12) has a rotational axis (D) that runs substantially parallel to the roller axis (A).

3. The roller burnishing tool (10) according to claim 1 or 2, **characterized in that** the roller cage (22) and the inner roller (24) have a clearance fit.

4. The roller burnishing tool (10) according to one of the preceding claims, **characterized in that** the inner roller (24) is releasably inserted into the roller cage (22).

5. The roller burnishing tool (10) according to one of the preceding claims, **characterized in that** the roller cage (22) and the inner roller (24) are made of a material pair having different materials.

6. The roller burnishing tool (10) according to one of the preceding claims, **characterized in that** the roller cage (22) and the at least one burnishing roller (14) are made of a material pair having different materials.

7. The roller burnishing tool (10) according to one of the preceding claims, **characterized in that** the inner roller (24) has liquid-conveying ducts (40).

8. The roller burnishing tool (10) according to one of preceding claims, **characterized in that** an inner roller set is provided with a plurality of inner rollers (24) with different outer diameters for exchanging.

9. The roller burnishing tool (10) according to one of the preceding claims, **characterized by** a roughening section (18) with elevations that project radially to the outside with regard to the roller axis (A).

## Revendications

1. Outil de galetage (10) doté d'un support de rouleaux (12) faisant saillie dans une direction d'avancement (V), sur lequel de multiples rouleaux de galetage (14) sont disposés dans le sens périphérique de manière à pouvoir pivoter autour d'un axe de rouleau (A) pour usiner une surface de pièce, dans lequel les rouleaux de galetage (14) présentent chacun une surface de contact prenant appui sur la pièce, dans lequel les rouleaux de galetage (14) présentent chacun une forme de base cylindrique et les rouleaux de galetage (14) sont montés chacun de manière à pouvoir être déplacés dans le sens radial (R), dans lequel le support de rouleaux (12) présente une cage à rouleaux en forme de bague (22), qui abrite les multiples rouleaux de galetage (14) de manière à ce qu'ils puissent pivoter, dans lequel un cylindre intérieur (24) présentant la forme de base d'une bague est inséré à l'intérieur de la cage à rouleaux (22), dans lequel le cylindre intérieur (24) présente une surface extérieure, dans lequel la surface extérieure du cylindre intérieur (24) interagit avec une surface extérieure des rouleaux de galetage (14), **caractérisé en ce que** le cylindre intérieur (24) est relié à un arbre moteur (26) de l'outil de galetage (10) transmettant une force d'entraînement.

2. Outil de galetage (10) selon la revendication 1, **caractérisé en ce que** le support de rouleaux (12) présente un axe de rotation (D), qui s'étend sensiblement en parallèle par rapport à l'axe des rouleaux (A).

3. Outil de galetage (10) selon la revendication 1 ou 2, **caractérisé en ce que** la cage à rouleaux (22) et le cylindre intérieur (24) présentent un ajustement avec jeu.

4. Outil de galetage (10) selon l'une des revendications précédentes, **caractérisé en ce que** le cylindre intérieur (24) est inséré de manière amovible dans la cage à rouleaux (22).

5. Outil de galetage (10) selon l'une des revendications précédentes, **caractérisé en ce que** la cage à rouleaux (22) et le cylindre intérieur (24) sont fabriqués à partir d'un appariement présentant des matériaux différents.

6. Outil de galetage (10) selon l'une des revendications précédentes, **caractérisé en ce que** la cage à rouleaux (22) et l'un au moins des rouleaux de galetage (14) sont fabriqués à partir d'un appariement présentant des matériaux différents.

7. Outil de galetage (10) selon l'une des revendications précédentes, **caractérisé en ce que** le cylindre intérieur (24) présente des canaux (40) de conduite de liquide.

8. Outil de galetage (10) selon l'une des revendications précédentes, **caractérisé en ce qu'**un jeu de cylindres intérieurs présentant de multiples cylindres intérieurs (24) de diamètres extérieurs différents est destiné à l'échange.

9. Outil de galetage (10) selon l'une des revendications précédentes, **caractérisé par** un tronçon rendu rugueux (18) présentant des protubérances faisant saillie radialement vers l'extérieur par apport à l'axe de rouleau (A).
